## Europäisches Patentamt
## European Patent Office
## Office européen des brevets

(11) Veröffentlichungsnummer: **0 140 224 B1**

# EUROPÄISCHE PATENTSCHRIFT

(45) Veröffentlichungstag der Patentschrift: 10.04.91

(51) Int. Cl.⁵: **H04J 3/04**, H04H 1/00

(21) Anmeldenummer: 84112068.6

(22) Anmeldetag: 09.10.84

(54) Digitales Signalübertragungssystem.

(30) Priorität: 29.10.83 DE 3339382
12.06.84 DE 3421686

(43) Veröffentlichungstag der Anmeldung:
08.05.85 Patentblatt 85/19

(45) Bekanntmachung des Hinweises auf die
Patenterteilung:
10.04.91 Patentblatt 91/15

(84) Benannte Vertragsstaaten:
AT BE CH DE FR GB IT LI LU NL SE

(56) Entgegenhaltungen:
DE-A- 3 126 880

N.H.K. LABORATORIES NOTE, Nr. 282, November 1982, Seiten 2-13, Tokyo, JP; T. YOSHINO et al.: "PCM sounds on digital subcarrier in television for a satellite broadcasting system"

RUNDFUNKTECHNISCHE MITTEILUNGEN, Band 24, Nr. 1, Januar 1980, Seiten 31-36, Hamburg, DE; W. THOMA: "Digitale Tonprogrammübertragung über 2048-KBIT/S-Verbindungen"

(73) Patentinhaber: TELEFUNKEN Fernseh und Rundfunk GmbH
Göttinger Chaussee 76
W-3000 Hannover 91(DE)

(72) Erfinder: Klank, Otto, Dipl.-Ing.
Allensteiner Strasse 12
W-3160 Lehrte-Arpke 12(DE)
Erfinder: Rottmann, Dieter, Dipl.-Ing.
Girlitzpark 20
W-3000 Hannover 61(DE)
Erfinder: Laabs, Jürgen, Dipl.-Ing.
Zehlendorfer Strasse 60
W-3017 Pattensen(DE)

(74) Vertreter: Einsel, Robert, Dipl.-Ing.
TELEFUNKEN Fernseh und Rundfunk GmbH
Göttinger Chaussee 76
W-3000 Hannover 91(DE)

## Beschreibung

Die Erfindung betrifft ein Übertragungsverfahren für ein digitales Signalübertragungssystem gemäß dem Oberbegriff des Patentanspruchs 1.

Aus "Digitaler Hörfunk über Rundfunksatelliten, Informationsbroschüre des Bundesministers für Forschung und Technologie", Seite 55 ff., ist ein digitales Übertragungsverfahren bekannt, bei dem 16 Stereo- bzw. 32 Mono-Tonrundfunkprogramme über Satelliten übertragen werden. Die einzelnen Kanäle werden PCM-codiert, jeder Abtastwert wird zu einem Modulationsrahmen zusammengefaßt und dann auf einen Träger 4 PSK moduliert.

Für eine Übertragung von Sender- und Programmart-Kennungsinformation werden bestimmte Bits des Rahmens benutzt und zu neuen Unterrahmen zusammengefaßt.

In der DE-A- 31 26 880, die sich ebenfalls mit der Kennzeichnung von Sendern- und Programmart-Informationen durch Übertragung von Kenn-Bits im Hauptrahmen befaßt, werden darüberhinaus für Hauptrahmen und Unterrahmen gleichartige Synchronworterkennungs-und Demultiplexerschaltungen beschrieben.

Für die Verbesserung der Signalqualität bei digitaler Tonübertragung ist in "Rundfunk Technische Mitteilungen", Jahrgang 27, 1983, Heft 1, Seite 9 ff. ein Quasi-Momentanwert-Kompander beschrieben. Bei einem solchen Kompander werden zunächst eine bestimmte Anzahl von Abtastwerten mit einer Auflösung von z.B. 14 Bit codiert. Sodann wird in Abhängigkeit von höchstwertigen der gespeicherten Codeworte eine entsprechende Quantisierung ausgewählt. Ausgesendet werden dann Codeworte mit einer reduzierten Bitlänge sowie ein Skalenfaktor für den ausgewählten Quantisierungsbereich.

Ein digitales Übertragungsformat für Audiosignale mit wahlweiser Übertragung von vier Kanälen bei 14/10 Bit pro Abtastwert in komprimierter Form und 32 kHz Abtastfrequenz mit einem Skalenfaktor als Mode A und zwei Kanälen bei 16 Bit pro Abtastwert und 48 kHz Abtastfrequenz als Mode B ist aus der Druckschrift "N.H.K. LABORATORIES NOTE, Nr. 282, November 1982, Seiten 2-13, Tokyo, JP; T. YOSHINO et al.: PCM sounds on digital subcarrier in television for a satellite broadcasting system" bekannt.

Zur Beseitigung von Dynamikstörungen bei fehlerhafter Übertragung des Skalenfaktors werden die den Skalenfaktor beinhaltenden Zusatzbits geschützt. Das bekannte Übertragungsformat zieht vor, daß sowohl die den Programmen zugeordneten Bitwörter als auch die den Skalenfaktoren zugeordneten Bitwörter in denselben Rahmen eingebunden werden.

Treten trotz des Schutzes der Zusatzbits dennoch Fehler auf, so sind Dynamikstörungen mangels weiterer Korrekturmöglichkeiten unvermeidlich.

Der Erfindung liegt die Aufgabe zugrunde, bei einem bekannten Modulationsrahmen eine ausreichende Sicherheit für die Rückgewinnung eines Skalenfaktors zu erreichen.

Diese Aufgabe wird durch die im Patentanspruch 1 angegebenen Maßnahmen gelöst. Vorteilhafte Weiterbildungen der Erfindung sind in den Unteransprüchen beschrieben.

Nachstehend wird ein Ausführungsbeispiel anhand der Zeichnung erläutert. Es zeigen:

Fig. 1     einen erfindungsgemäßen Modulationsrahmen,
Fig. 2     ein anderes Ausführungsbeispiel,
Fig. 3     einen Rahmen für den Skalenfaktor,
Fig. 4a     Unterrahmen für Programmkennung (Ausschnitt)
Fig. 4b     Unterrahmen für Programmkennung der Programme 1-16
Fig. 4c-4e     Unterrahmen für Skalenfaktor der einzelnen Programme 1-16.

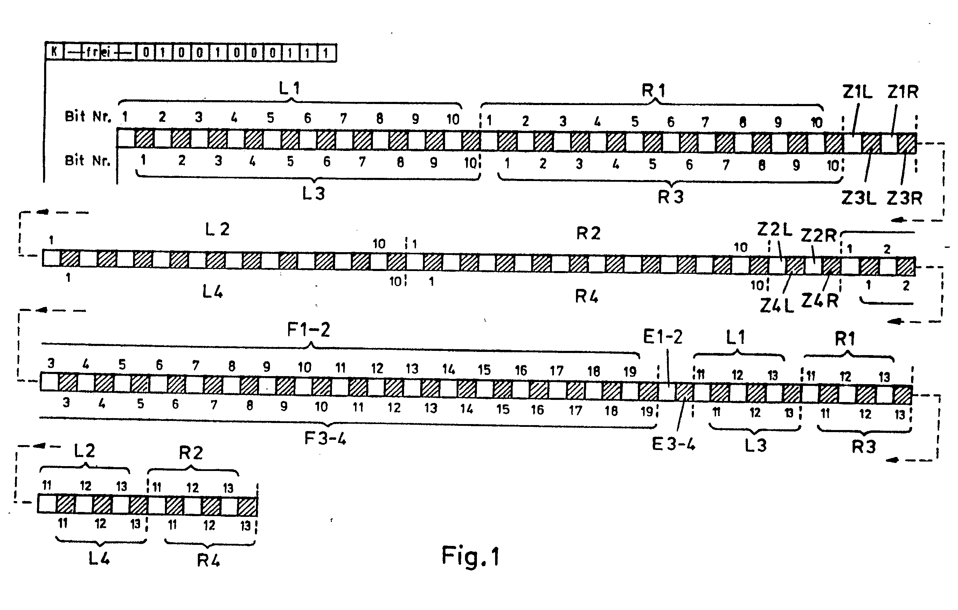

Fig. 1 zeigt den Aufbau eines erfindungsgemäßen Modulationsrahmens. Hierbei wird die gleiche Verschachtelung der durch BCH-Code geschützten Informationsbits verwendet, wie sie in der Deutschen Patentanmeldung DE-A-33 08 025.9 beschrieben ist. Im Gegensatz jedoch zum Modulationsrahmen dieser Anmeldung werden die jeweils 11ten höherwertigen Informationsbits eines Kanals, die durch ein Fehlerkorrektursystem geschützt sind, durch Zusatzbits ersetzt. Diese Zusatzbits sind durch ihre Eingliederung in das Fehlerkorrektursystem hinreichend gegenüber Übertragungsfehler geschützt. Bei diesem Modulationsrahmen wird eine Quasimomentanwert-Kompandierung verwendet; bei der insgesamt 13 Informationsbits pro Kanal eines Stereoprogrammes, bzw. pro Monoprogramm übertragen werden. Dabei gibt der Buchstabe den linken L bzw. rechten R Kanal und die Ziffer die Nummer des Stereoprogrammes an. Der Buchstabe Z kennzeichnet ein Zusatzbit. Z2L bedeutet dann: Zusatzbit des linken Kanals des zweiten Stereoprogrammes.

Der Aufbau je eines Teilrahmens des Modulationsrahmens sieht wie folgt aus:

Zu Beginn werden 16 Bit für Sonderdienste und Synchronisation übertragen. Die Bit haben folgende Zuordnung:

1 Bit     Sender- und Programmartkennung, K
4 Bit     für Sonderdienste

11 Bits      Synchronisation

Es folgen bis zur nächsten 16-Bit-Sequenz 2 x 152 Bits für je 4 Stereo- bzw. 8 Monoprogramme mit folgender Zuordnung:

| | |
|---|---|
| 2 x (10 + 10) Bits | geschützte Informationsbits der ungeradzahligen Programme L1-R3 bzw. L5-R7 |
| 4 X 1 Bit | Zusatzbit für Skalenfaktor dieser ungeradzahligen Programme Z1L-Z3R bzw. Z5L-Z7R |
| 2 x (10 + 10) Bits | geschützte Informationsbits der geradzahligen Programme L2, R4 bzw. L6. R8 |
| 4 x 1 Bit | Zusatzbit für Skalenfaktor dieser geradzahligen Programme Z2L-Z4R bzw. Z6L-Z8R |
| 2 x 19 Bits | Fehlerkorrektursystem F1-2, F3-4 bzw. F5-6. F7-8 |
| 2 Bits | Ergänzungsbits |
| 4 x (3 + 3) Bits | ungeschützte Informationsbits der Programme L1-R4 bzw. L5-R8 |

Bei linear 14-Bit-Übertragung pro Kanal erhöht sich die Modulationsrahmenlänge um 16 Bit. Es werden dann 4 Bit pro Kanal ungeschützt übertragen. Zur Verkürzung der Modulationsrahmenlänge ist es jedoch möglich, 4 freie Bits der Sonderdienste und die 4 Ergänzungsbits E1-2 bis E7-8 zu belegen, so daß dann der Modulationsrahmen eine Länge von 2 x 328 Bits aufweist.

Zur Ermittlung der Skalenfaktoren für die einzelnen Programme werden innerhalb eines Zeitrahmens von z.B. 1 ms die Höchstwerte eines jeden Kanals ermittelt. Je nach ermitteltem Höchstwert werden die Skalenfaktoren festgelegt. Bei einer Wortlänge von 3 Bits ergeben sich 8 Skalenfaktor-Bereiche.

Bei linearer Übertragung dient der Skalenfaktor als zusätzlicher Fehlerschutz. Ist in dem Zeitraum trotz Fehlerkorrektur und Interpolation ein Abtastwert fehlerhaft und überschreitet dieser Abtastwert die durch den Skalenfaktor vorgegebene Begrenzung, so wird dieser Abtastwert entweder durch den vorangehenden Abtastwert ersetzt oder es wird zwischen den benachbarten, richtigen Abtastwerten interpoliert. Für einen solchen Fall ist eine ungeschützte Übertragung des Skalenfakors ausreichend.

Treten eine größere Anzahl von Abtastwerten auf, die als fehlerhaft gekennzeichnet sind, dient dies als ein Kriterium für einen gestörten Skalenfaktor. In diesem Fall wird auf eine Ausnutzung des Skalenfaktors für die Fehlerkorrektur verzichtet.

Bei einer nichtlinearen Übertragung werden die Programme mit 16 Bits codiert und mit 14 Bits übertragen. Der Skalenfaktor dient in diesem Fall zur Regenerierung des 16 Bit-Abtastwertes und muß daher ausreichend geschützt übertragen werden. Dies geschieht durch die Einbindung des Skalenfaktors in einen BCH-Block.

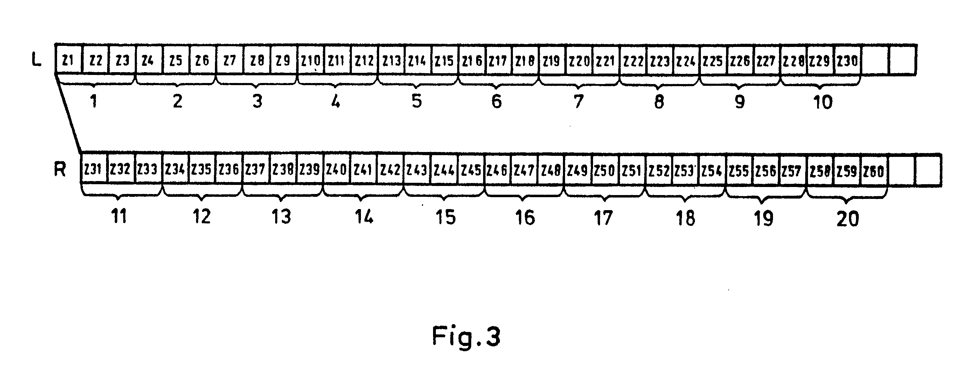

Während 1 ms wird der Skalenfaktor 10 mal übertragen und zu einem Rahmen, wie er in Fig. 3 dargestellt ist, zusammengefaßt. Bei einer Bitfolgefrequenz von $32 . 10^3$ bit/sek des Hauptrahmens werden in 1 ms 32 Zusatzbits übertragen. Diese sind in Fig 3 mit Z1 bis Z30 für den linken Kanal 1 eines Stereoprogrammes bezeichnet, und mit Z31-Z60 für den rechten Kanal Reines Steroprogrammes. Die letzten beiden Bits sind jeweils frei. Durch Mehrheitsentscheidung wird ein zusätzlicher Schutz für den Skalenfaktor erzielt. Der am häufigsten auftretende Skalenfaktor eines Rahmens nach Fig. 3 wird zur Auswertung herangezogen.

Es werden je 3 Bits, z.B. Z1 + Z2 + Z3, zu einem Skalenfaktor 1-10 zusammengefaßt.

Die Synchronisierung des Rahmens für den Skalenfaktor wird durch die Synchronisierung des Sender- und Programmartkennungs-Rahmens durchgeführt. Ein zusätzliches Synchronwort ist daher für den Skalenfaktorrahmen nicht erforderlich. Da der Rahmen für Sender- und Programmartkennung 320 Bits lang ist, wird jeder 10. Skalenfaktorrahmen synchronisiert.

Bei Verwendung einer differentiellen Codierung der 4 PSK, die in Code eine Taktinformation beinhaltet, mit empfängerseitiger Differenz-demodulation ist mit diesem Synchronisierungsverfahren eine hinreichend große Synchronisierungssicherheit gegeben.

Bei Verwendung einer kohärenten Demodulation mit erforderlicher Trägerrückgewinnung ist für den Skalenfaktorrahmen unter Umständen eine eigene Synchronisierung notwendig. Der erforderliche Platz für das Synchronisierungswort wird dadurch erhalten, daß weniger Skalenfaktoren pro Rahmen übertragen werden. Bei Übertragung von 7 Skalenfaktoren pro Rahmen erhält man dann ein Synchronisierungswort mit einer Länge von 11 Bits.

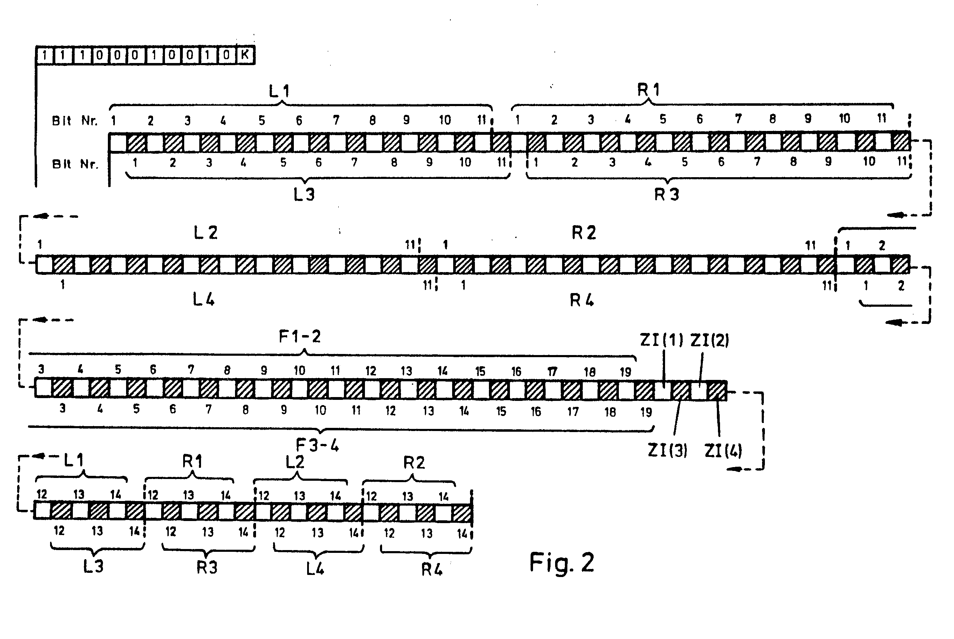

Fig. 2 zeigt ein anderes Ausführungsbeispiel eines erfindungsgemäßen Modulationsrahmens.

Bei Einhaltung einer Rahmenlänge von 2 x 320 Bits, wie sie in "Digitaler Hörfunk über Rundfunksatelliten, Informationsbroschüre des Bundesministers für Forschung und Technology", Seite 56, beschrieben ist, sowie einer Übertragung von 14 Bits pro Kanal werden die Sonderdienst-und Ergänzungsbits den Zusatzbits zugeordnet. Ein Kennbit K wird nach dem Synchronwort des Hauptrahmens übertragen. Die Zusatzbits ZI(1)-ZI(16) sind im Modulationsrahmen nach dem Fehlerkorrektursystem F1-2 - F15-16 zugeordnet.

Der Aufbau je eines Teilrahmens sieht wie folgt aus

3

11 Bits      Synchronisation

1 Bit      Sender- und Programmartkennung K

Es folgen bis zur nächsten 12-Bit-Sequenz 2 x 154 Bits für je 4 Stereo- bzw. 8 Monoprogramme mit folgender Zuordnung

4 x (11 + 11) Bits      geschützte Informationsbits L1-R4, L5-R8

2 x 19 Bits      Fehlerkorrektursystem F1-2, F3-4 ; F5-6, F7-8

4 Bits      Zusatzbits ZI(1)-ZI(4) ; ZI(5)-ZI(8)

4 X (3 + 3) Bits      ungeschützte Informationsbits der Programme L1-R4 ; L5-R8

Aus den Zusatzbits (ZI(1)-ZI(16)) wird je nach gewählten Programm (ein ZI-Bit) der Skalenfaktorrahmen erstellt, der durch das Synchronwort des Kennbitrahmens synchronisiert wird und den durch einen BCH-Code geschützten Skalenfaktor enthält. Die Anzahl der im Rahmen enthaltenen Skalenfaktoren wird durch die Länge des verwendeten BCH-Codes bestimmt. Die Anzahl der übertragenen Skalenfaktoren je Tonkanal beträgt dann z.B. 3 bei einer Gesamtlänge des Skalenfaktorrahmens von 64 Bits für eine Übertragungszeit bzw. Skalenfaktorermittlungsphase von 2 m sek. In den noch verbleibenden Bitzellen des Rahmens können noch weitere programmbegleitende Informationen übertragen werden.

Bei einem weiteren Ausführungsbeispiel wird der aus dem Kennbit K erzeugte Programmkennungsrahmen durch ein Synchronwort synchronisiert und enthält Programmartinformationen der übertragenen Stereo-bzw. Monoprogramme. Je zwei Stereo-, vier Monoprogramme oder eine Kombination werden zusammengefaßt und durch ein Synchronwort von dem übrigen getrennt. Die Synchronworte dienen gleichzeitig zur Synchronisierung eines Skalenfaktorrahmens.

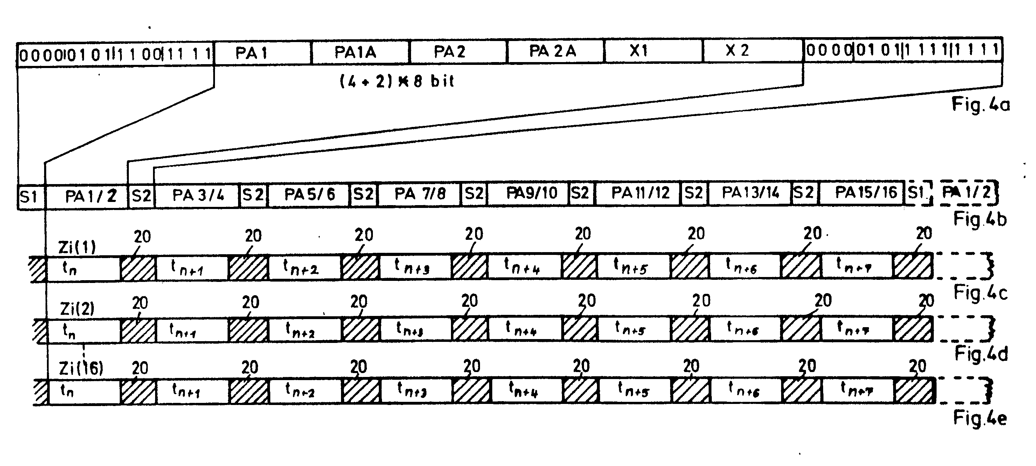

Fig. 4 zeigt einen Ausschnitt aus dem Unterrahmen für Programmkennung. Zu Beginn einer Unterrahmenübertragung wird ein Synchronwort 51 mit 16 Bit Länge gesendet. Dieses 16 Bit Synchronwort S1 ist z.B. ein Williard-Code-Wort. Es hat gegenüber dem im Hauptrahmen verwendeten 11 Bit-Barker-Codewort den Vorteil, daß es gegenüber Informationen im Datenteil eine Mindestdistanz von 2 erreicht. An dieses Synchronwort S1 schließen sich die Programmkennungsinformationen PA1, PA1a, PA2, PA2a an, die jeweils 8 Bit lang sind, und je einen Monokanal bzw. paarweise zusammengefaßt einen Stereokanal repräsentieren. Die Datenworte X1, X2 sind frei für zukünftige Anwendungen und sind z .Zt. mit "00000000" belegt.

Daran schließt sich ein von dem Synchronwort S1 verschiedenes Synchronwort S2 an. Für dieses Synchronwort S2 wird ein modifizierter 16 Bit Williard-Code verwendet, der sich im 10. und 11. Bit von dem Synchronwort S1 dadurch unterscheidet, daß diese Bits invertiert sind. Das Synchronwort S2 erreicht gegenüber Informationen im Datenteil eine Mindestdistanz von 2.

Fig. 4b zeigt den vollständigen Programmkennungsrahmen. Der Beginn eines Programmkennungsrahmens wird gekennzeichnet durch das Auftreten des Synchronwortes S1. Daran schließen sich die Programmkennungsinformationen PA1/2 bis PA 15/16 an. Zur Trennung dieser Programmkennungsinformationen wird jeweils das Synchronwort S2 verwendet.

Fig. 4c bis 4e zeigen die Skalenfaktorunterrahmen, sowie ihre zeitliche Zuordnung zu dem Programmkennungsrahmen Fig. 4b. Wie den Figuren 4c bis 4e zu entnehmen ist, fallen zeitlich jeweils das erste Bit einer Programmkennungsinformation PA 1/2 bis PA 15/16 mit dem ersten Bit einer Skalenfaktorfolge Zi (1) bis Zi (16) zusammen. Die Skalenfaktorrahmen werden durch die Synchronworte S1, S2 synchronisiert.

Nach einer Zeitperiode tn für die Übertragung des ersten Skalenfaktors Zi (1) bis Zi (16), folgt eine Anzahl Bits 20 für freie Anwendungen. Diese Bits 20 enden zeitlich mit dem letzten Bit der Synchronworte S1, S2. Im Zeitraum tn wird ein Skalenfaktorwert für ein Stereoprogramm bzw. zwei Monoprogramme mehrfach übertragen. In den darauffolgenden Zeitabschnitten tn + 1 ... tn + m werden die jeweils für diesen Zeitabschnitt geltenden Skalenfaktoren gesendet.

Für die Programmkennungsinformation PA1, PA1a ... PA16, PA16a ist folgender Code vorgesehen:

| Nummer | Code | | | | | | | |
|---|---|---|---|---|---|---|---|---|
| | Bit 7 | Bit 6 | Bit 5 | Bit 4 | Bit 3 | Bit 2 | Bit 1 | Bit 0 |
| 0 | 0 | 0 | 0 | 0 | M | 0 | 1 | P |
| 1 | 0 | 0 | 0 | 1 | M | 0 | 1 | P |
| 2 | 0 | 0 | 1 | 0 | M | 0 | 1 | P |
| 3 | 0 | 0 | 1 | 1 | M | 0 | 1 | P |
| 4 | 0 | 1 | 0 | 0 | M | 0 | 1 | P |
| 5 | 0 | 1 | 0 | 1 | M | 0 | 1 | P |
| 6 | 0 | 1 | 1 | 0 | M | 0 | 1 | P |
| 7 | 0 | 1 | 1 | 1 | M | 0 | 1 | P |
| 8 | 1 | 0 | 0 | 0 | M | 0 | 1 | P |
| 9 | 1 | 0 | 0 | 1 | M | 0 | 1 | P |
| 10 | 1 | 0 | 1 | 0 | M | 0 | 1 | P |
| 11 | 1 | 0 | 1 | 1 | M | 0 | 1 | P |
| 12 | 1 | 1 | 0 | 0 | M | 0 | 1 | P |
| 13 | 1 | 1 | 0 | 1 | M | 0 | 1 | P |
| 14 | 1 | 1 | 1 | 0 | M | 0 | 1 | P |
| 15 | 1 | 1 | 1 | 1 | M | 0 | 1 | P |

Tabelle

Die unter der Bezeichnung "Nummer" stehenden Ziffern 0 - 15 kennzeichnen die verschiedenen Bedeutungen des Programmaterials. Sie sind in den ersten vier Bits der unter "Code" stehenden acht Spalten binär codiert. In der fünften Spalte ist eine zusätzliche Codierung "M" hinsichtlich Musik-Sprache-Erkennung vorhanden. Die beiden Bit 2 und Bit 1 sind auf "01", festgelegt, um eine bestimmte Distanz gegenüber den Synchronworten S1, S2 zu gewährleisten. Das letzte Bit ist ein Paritätsbit P, durch das im Empfänger eine Paritätskontrolle in Verbindung mit einer Mehrheitsauswertung der im allgemein ständig wiederholten Information durchgeführt werden kann. Um eine Mindestdistanz der Synchronworte S1. S2 zu dem Datenstrom von 2 zu gewährleisten, wird das Paritätsbit P bei gerader Anzahl von "1" der Bit 7 .. Bit 1 auf "0" gesetzt.

Für die Stereoübertragung wird im ersten 8-Bit-Codewort PA1 ... PA16 entsprechend Tabelle die Programmkennungsinformation übertragen. Im zweiten 8-Bit-Codewort PA1a ... PA16a ist die Stereokennung enthalten, und zwar in der Form

"XXXX 010 P"

wobei "XXXX" für beliebige Zusatzinformationen zur Verfügung stehen.

Durch die Auswertung dieser im Programmkennungsrahmen enthaltenen Informationen wird eine Übersicht geliefert über die ein Rahmen übertragenen Programme. Es ist also möglich, nach Mono- und Stereoprogrammen zu suchen, sich zu informieren, welche Arten von Programmen zur Zeit übertragen werden und ob gerade Musik oder Sprache gesendet wird. Damit wird die Auswertung der gesamten Informationen z.B. per Mikroprozessorsystem vereinfacht und ein relativ schneller Programmzugriff bzw. Programmartsuchlauf ermöglicht.

**Ansprüche**

1. Übertragungsverfahren für ein digitales Signalübertragungssystem, insbesondere für Satelliten-Rundfunk, bei dem in einem Modulationsrahmen, bestehend aus zwei Teilrahmen, sequentiellen Stereo- und/oder Mono-Programmen zugeordnete Bitwörter (L,R) mit einem Fehlerkorrektursystem (F) und jeweils nach einer Anzahl von Programmen eine weitere Bitfolge (t) für Zusatzinformationen übertragen werden, wobei diese Bitfolge ein Kenn-Bit (K) für Programmartinformationen enthält, **dadurch gekennzeichnet,** daß den den Programmen zugeordneten Bitwörtern Zusatzbits (ZI(1)-ZI(16)) zugeordnet sind und die in mehreren aufeinanderfolgenden Sequenzen der den Programmen zugeordneten Bitwörter übertragenen Zusatzbits (ZI(1)-ZI(16)) einen Unterrahmen bilden, der Informationen über einen Skalenfaktor und optional weitere programmbegleitende Informationen enthält.

2. Verfahren nach Anspruch 1, **dadurch gekennzeichnet,** daß der Skalenfaktor (1-20) aus dem maximalen und/oder minimalen Abtastwert eines Zeitbereiches ermittelt wird.

3. Verfahren nach Anspruch 1, **dadurch gekennzeichnet,** daß der Skalenfaktor (1-20) aus 3 Bits besteht.

4. Verfahren nach Anspruch 1, **dadurch gekennzeichnet,** daß die Zusatzbits (ZI(1)-ZI(16)) ungeschützt übertragen werden.

5. Verfahren nach einem oder mehreren der vorhergehenden Ansprüche, **dadurch gekennzeichnet,** daß die Zusatzbits (ZI(1)-ZI(16)) durch einen BCH-Code geschützt übertragen werden.

6. Verfahren nach Anspruch 1, **dadurch gekennzeichnet,** daß jedem Stereoprogramm ein Zusatzbit (ZI-(1)-ZI(16)) zugeordnet ist.

7. Verfahren nach Anspruch 1, **dadurch gekennzeichnet,** daß der Skalenfaktor (1-20) in einem Zeitbereich mehrfach übertragen wird.

8. Verfahren nach Anspruch 1, **dadurch gekennzeichnet,** daß die Kennbits (K) zeitselektiv ausgewertet und zu einem Kennbit-Unterrahmen zusammengesetzt werden.

9. Verfahren nach Anspruch 8, **dadurch gekennzeichnet,** daß der Unterrahmen für die Kennbits (K) ein Synchronwort enthält.

10. Verfahren nach Anspruch 9, **dadurch gekennzeichnet,** daß der Unterrabmen für die Zusatzbits (ZI(1)-ZI(16)) durch das Synchronwort des Kennbit-Unterrahmens synchronisiert wird.

11. Verfahren nach Anspruch 1, **dadurch gekennzeichnet,** daß der Skalenfaktor (1-20) zur zusätzlichen Fehlererkennung und/oder -verminderung für die den Stereo- und/oder Mono-Programmen zugeordneten Bitwörter herangezogen wird.

12. Verfahren nach Anspruch 1 und 11, **dadurch gekennzeichnet,** daß ein fehlerhafter Abtastwert durch den vorangehenden Abtastwert ersetzt wird.

13. Verfahren nach Anspruch 1 und 11, **dadurch gekennzeichnet,** daß ein fehlerhafter Abtastwert durch den Mittelwert zeitlich benachbarter, demselben Kanal zugeordneter Abtastwerte ersetzt wird.

14. Verfahren nach den Ansprüchen 7 und 11, **dadurch gekennzeichnet,** daß eine Mehrheitsentscheidung für den wahrscheinlich richtigen Skalenfaktor (1-10, 11-20) getroffen wird.

15. Verfahren nach Anspruch 1, **dadurch gekennzeichnet,** daß jeder Teilrahmen des Modulationsrahmens mit 14 Bit pro Abtastwert den folgenden Aufbau hat:

| | |
|---|---|
| 12 Bits | für Sonderdienste und Synchronisation mit folgender Zuordnung: |
| 11 Bits | Synchronisation |
| 1 Bit | Sender- und Programmartkennung (K) |
| | daran anschließend 2 x 154 Bits für je 4 Stereo- bzw. 8 Monoprogramme mit folgender Zuordnung: |
| 4 x (11 + 11) Bits | geschützte Informationsbits (L1-R4) |
| 2 x 19 Bits | Fehlerkorrektursystem (F1-2, F3-4) |
| 2 x 2 Bits | Zusatzbits (ZI(1)-ZI(4)) |
| 4 x (3 + 3) Bits | ungeschützte Informationsbits (L1-R4). |

16. Verfahren nach Anspruch 1 und 8, **dadurch gekennzeichnet,** daß das Übertragungsformat des Kennbit-Unterrahmens alternierend ein Synchronwort (S1,S2) und eine für einen Teil der übertragenen Programme kennzeichnende Programmkennungsinformation (PA 1/2 .. PA 15/16) enthält.

17. Verfahren nach Anspruch 16, **dadurch gekennzeichnet,** daß zwei unterschiedliche Synchronworte (S1,S2) verwendet werden.

18. Verfahren nach Anspruch 16, **dadurch gekennzeichnet,** daß für ein erstes Synchronwort (S1) ein 16-Bit-Williard-Codewort und für ein zweites Synchronwort (52) dasselbe, jedoch um 2 Bit veränderte Codewort verwendet wird.

19. Verfahren nach Anspruch 17 und 18, **dadurch gekennzeichnet,** daß das erste Synchronwort (S1) durch die Bitfolge "0000 0101 1100 111" gekennzeichnet ist.

20. Verfahren nach Anspruch 17 und 18, **dadurch gekennzeichnet,** daß das zweite Synchronwort (S2) durch die Bitfolge "0000 0101 1111 1111" gekennzeichnet ist.

21. Verfahren nach Anspruch 19, **dadurch gekennzeichnet,** daß der Programmkennungsrahmen mit dem ersten Synchronwort (S1) beginnt.

22. Verfahren nach Anspruch 21, **dadurch gekennzeichnet,** daß die Programmkennungsinformation (PA 1/2) für den 1. BCH-Block des Hauptrahmens nach dem Synchronwort (S1) "0000 0101 1100 1111" übertragen wird.

23. Verfahren nach Anspruch 16, **dadurch gekennzeichnet,** daß für die Programmkennungsinformation (PA 1/2 ... PA 15/16) ein 8-Bit Code (Tabelle) verwendet wird.

24. Verfahren nach Anspruch 23, **dadurch gekennzeichnet,** daß die Programmkennungsinformationen (PA 1/2 ... PA 15/16) folgende Einzelangabe je BCH-Block zugeordnetem Kennungsblock enthalten:
   a) Programmartkennzeichnung (Bit 7 .. Bit 4)
   b) Musik - Sprache Kennung (Bit 3)
   c) Stereo/Mono-Übertragungskennung (Bit 2 und Bit 1)
   d) Paritätsbit (Bit 0).

25. Verfahren nach Anspruch 23, **dadurch gekennzeichnet,** daß die Programmkennungsinformationen (PA 1/2 ... PA 15/16) Code-Freiräume ($x_1$,$x_2$) enthalten.

26. Verfahren nach Anspruch 24, **dadurch gekennzeichnet,** daß für die Stereo-Übertragung die Bit 2 und Bit 1 des 8-Bit Codes (Tabelle) in der Programmkennungsinformation (PA 1/2 ... PA 15/16) invertiert sind.

27. Verfahren nach Anspruch 26, **dadurch gekennzeichnet,** daß die Bit 1 und Bit 2 des 8-Bit Codes (Tabelle) Festbits sind.

28. Verfahren nach Anspruch 26, **dadurch gekennzeichnet,** daß für die Stereo-Übertragung die Programminformation (PA 1/2 ... PA 15/16) in dem ersten übertragenen 8-Bit Code (Tabelle) und die Stereokennung in einem zweiten 8-Bit Code der Programmkennungsinformation (PA 1/2 ... PA 15/16) enthalten ist.

29. Verfahren nach Anspruch 27 und 28, **dadurch gekennzeichnet,** daß bei der Programmkennungsinformation (PA 1/2 ... PA 15/16) für die Monoübertragungskennung und für den ersten Teil der Stereoübertragungskennung die Bit 2 und Bit 1 mit "01" belegt sind.

30. Verfahren nach Anspruch 28, **dadurch gekennzeichnet,** daß bei der Programmkennungsinformation (PA 1/2 ... PA 15/16) für den zweiten Teil der Stereoübertragungskennung die Bit 3 .. Bit 1 mit "010" belegt sind.

31. Verfahren nach Anspruch 30, **dadurch gekennzeichnet,** daß die Bit 7 ... Bit 4 für Zusatzinformationen zur Verfügung stehen.

**32.** Verfahren nach Anspruch 16 und/oder 17, **dadurch gekennzeichnet,** daß die Synchronworte (S1,S2) einem Skalenfaktorrahmen zur Synchronisierung dienen.

## Claims

**1.** Method of transmission for a digital signal transmission system, in particular for satellite broadcasting, in which in a modulation frame, consisting of two part frames, bit words (L, R) assigned to sequential stereo and/or mono programs and with an error correction system (F] are transmitted, together after a number of programs with a further bit sequence (t) for additional data, in which this bit sequence contains a flag bit (K) for program type data, characterized in that additional bits (ZI(1)-ZI(16)) are assigned to the bit words assigned to the programs and the additional bits (ZI(1)-ZI(16)) transmitted in several successive sequences of the bit words assigned to the programs form a sub-frame which contains data on a scale factor and optionally further program-accompanying data.

**2.** Method according to claim 1, characterized in that the scale factor (1-20) is determined from the maximum and/or minimum sampled value of a time domain.

**3.** Method according to claim 1, characterized in that the scale factor (1-20) consists of 3 bits.

**4.** Method according to claim 1, characterized in that the additional bits (ZI(1)-ZI(16)) are transmitted unprotected.

**5.** Method according to one or more of the preceding claims, characterized in that the additional bits (ZI-(1)-ZI(16)) are transmitted protected by a BCH code.

**6.** Method according to claim 1, characterized in that there is assigned to each stereo program an additional bit (ZI(1)-ZI(16)).

**7.** Method according to claim 1, characterized in that the scale factor (1-20) is transmitted a plurality of times within one time domain.

**8.** Method according to claim 1, characterized in that the flag bits (K) are evaluated time-selectively and are assembled into a flag bit sub-frame.

**9.** Method according to claim 8, characterized in that the sub-frame for the flag bits (K) contains a sync word.

**10.** Method according to claim 9, characterized in that the sub-frame for the additional bits (ZI(1)-ZI(16)) is synchronized by the sync word of the flag bit sub-frame.

**11.** Method according to claim 1, characterized in that the scale factor (1-20) is used for additional error recognition and/or reduction for the bit words assigned to the stereo and/or mono programs.

**12.** Method according to claims 1 and 11, characterized in that an incorrect sampled value is replaced by the preceding sampled value.

**13.** Method according to claims 1 and 11, characterized in that an incorrect sampled value is replaced by the mean value of temporally adjacent sampled values assigned to the same channel.

**14.** Method according to claims 7 and 11, characterized in that a majority vote is taken regarding the probably correct scale factor (1-10, 11-20).

**15.** Method according to claim 1, characterized in that each part frame of the modulation frame with 14 bits per sampled value has the following layout:

    12 bits    for special services and synchronization assigned as follows:

11 bits     synchronization

1 bit        transmitter and program type identification (K)

                   followed by 2 x 154 bits for 4 stereo or 8 mono programs respectively assigned as follows:

4 x (11 + 11) bits     protected information bits (L1-R4)

2 x 19 bits            error correction system (F1-2, F3-4)

2 x 2 bits              additional bits (ZI(1)-ZI(4))

4 x (3 + 3) bits       unprotected information bits (L1-R4)

16. Method according to claims 1 and 8, characterized in that the transmission format of the flag bit sub-frame contains alternately a sync word (S1, S2) and program identification data (PA 1/2 ... PA 15/16) identifying for a part of the transmitted programs.

17. Method according to claim 16, characterized in that two different sync words (S1, S2) are used.

18. Method according to claim 16, characterized in that there is used as a first sync word (S1) a 16-bit Williard code word and as a second sync word (S2] the same code word, but modified in respect of 2 bits.

19. Method according to claims 17 and 18, characterized in that the first sync word (S1) is identified by the bit sequence "0000 0101 1100 111".

20. Method according to claims 17 and 18, characterized in that the second sync word (S2) is identified by the bit sequence "0000 0101 1111 1111"

21. Method according to claim 19, characterized in that the program identification frame starts with the first sync word (S1).

22. Method according to claim 21, characterized in that the program identification data (PA 1/2) is transmitted for the 1st BCH block of the main frame after the sync word (S1) "0000 0101 1100 1111".

23. Method according to claim 16, characterized in that an 8-bit code (table) is used for the program identification data (PA 1/2 ... PA 15/16).

24. Method according to claim 23, characterized in that the program identification data (PA 1/2 ... PA 15/16) contain the following individual entries per BCH block-assigned identification block :

    a) program type identification (bit 7 ... bit 4)

    b) music - language identifier (bit 3)

    c) stereo/mono transmission identifier (bit 2 and bit 1)

    d) parity bit (bit 0)

25. Method according to claim 23, characterized in that the program identification data (PA 1/2 ... PA 15/16) contains code-free spaces ($x_1$, $x_2$).

26. Method according to claim 24, characterized in that for stereo transmission bit 2 and bit 1 of the 8-bit code (table) are inverted in the program identification data (PA 1/2 ... PA 15/16).

27. Method according to claim 26, characterized in that bit 1 and bit 2 of the 8-bit code (table) are fixed bits.

28. Method according to claim 26, characterized in that for stereo transmission the program data (PA 1/2 ... PA 15/16) is contained in the first transmitted 8-bit code (table) and the stereo identifier in a second 8-bit code of the program identification data (PA 1/2 ... PA 15/16).

29. Method according to claims 27 and 28, characterized in that in the program identification data (PA 1/2 ... PA 15/16) bit 2 and bit 1 are occupied by "01" for the mono transmission identifier and for the first part of the stereo transmission identifier.

30. Method according to claim 28, characterized in that in the program identification data (PA 1/2 ... PA

9

15/16) bits 3 ... 1 are occupied by "010" for the second part of the stereo transmission identifier.

**31.** Method according to claim 30, characterized in that bit 7 ... bit 4 are available for additional data.

**32.** Method according to claim 16 and/or 17, characterized in that the sync words (S1, S2) serve to synchronize a scale factor frame.


**Revendications**

**1.** Procédé de transmission pour un système de transmission numérique de signaux, en particulier pour la radiodiffusion par satellites, dans lequel, dans un cadre de modulation composé de deux cadres partiels, des mots en bits (L, R), affectés à des programmes stéréo et/ou mono séquentiels sont transmis avec un système de correction d'erreurs (F) et un autre débit binaire (Z) pour des informations supplémentaires est transmis respectivement après un nombre de programmes, ce débit binaire contenant un bit significatif (K) pour des informations de type de programme, **caractérisé en ce** que des bits supplémentaires sont affectés aux mots en bits affectés aux programmes et que les bits supplémentaires transmis (ZI(1)-ZI(16)) en plusieurs séquences consécutives des mots en bits affectés aux programmes forment un souscadre qui contient des informations sur un facteur de cadrage et, en option, d'autres informations accompagnant le programme.

**2.** Procédé selon la revendication 1, **caractérisé en ce** que le facteur de cadrage (1-20) est déterminé à partir de la valeur de balayage maximale et/ou minimale d'une plage temporelle.

**3.** Procédé selon la revendication 1, **caractérisé en ce** que le facteur de cadrage (1-20) est composé de 3 bits.

**4.** Procédé selon la revendication 1, **caractérisé en ce** que les bits supplémentaires (ZI(1)-ZI(16)) sont transmis sans être protégés.

**5.** Procédé selon l'une ou plusieurs des revendications précédentes, **caractérisé en ce** que les bits supplémentaires (ZI(1)-ZI(16)) sont transmis en étant protégés par un code BCH.

**6.** Procédé selon la revendication 1, **caractérisé en ce** qu'un bit supplémentaire (ZI(1)-ZI(16)) est affecté à chaque programme stéréo.

**7.** Procédé selon la revendication 1, **caractérisé en ce** que le facteur de cadrage (1-20) est transmis plusieurs fois dans une plage de temps.

**8.** Procédé selon la revendication 1, **caractérisé en ce** que les bits de caractérisation (K) sont exploités par sélection dans le temps et sont réunis en un sous-cadre à bit de caractérisation.

**9.** Procédé selon la revendication 8, **caractérisé en ce** que le sous-cadre pour les bits de caractérisation (K) contient un mot de synchronisation.

**10.** Procédé selon la revendication 9, **caractérisé en ce** que le sous-cadre pour les bits supplémentaires (ZI(1)-ZI(16)) est synchronisé par le mot de synchronisation du sous-cadre à bit de caractérisation.

**11.** Procédé selon la revendication 1, **caractérisé en ce** que le facteur de cadrage (1-20) est utilisé pour une reconnaissance et/ou réduction supplémentaire d'erreurs pour les mots en bits affectés aux programmes stéréo et/ou mono.

**12.** Procédé selon les revendications 1 et 11, **caractérisé en ce** qu une valeur de balayage incorrecte est remplacée par la valeur de balayage précédente.

**13.** Procédé selon les revendications 1 et 11, **caractérisé en ce** qu'une valeur de balayage incorrecte est remplacée par la valeur moyenne de valeurs de balayage voisines dans le temps, affectées au même canal.

14. Procédé selon les revendications 1 et 11, **caractérisé en ce** qu'une décision majoritaire est prise pour le facteur de cadrage probablement correct (1-10, 11-20).

15. Procédé selon la revendication 1, **caractérisé en ce** que chaque cadre partiel du cadre de modulation avec 14 bits par valeur de balayage a la structure suivante :

12 bits    pour services spéciaux et synchronisation avec affectation suivante :
11 bits    synchronisation
1 bit    caractérisation de type de programme et d'émetteur (K)

Suivent ensuite 2 x 154 bits pour respectivement 4 programmes stéréo ou 8 programmes mono avec l'affectation suivante :

4 x (11 + 11) bits    bits d'information protégés (L1-R4)
2 x 19 bits    système de correction d'erreurs (F1-2, F3-4)
2 x 2 bits    bits supplémentaires (ZI(1)-ZI(4))
4 x (3 + 3) bits    bits d'information non protégés (L1-R4)

16. Procédé selon les revendications 1 et 8, **caractérisé en ce** que le format de transmission du sous-cadre à bit de caractérisation contient en alternance un mot de synchronisation (S1, S2) et une information de caractérisation de programme (PA 1/2 ... PA 15/16) qui caractérise une partie des programmes transmis.

17. Procédé selon la revendication 16, **caractérisé en ce** que deux mots de synchronisation (S1, S2) différents sont utilisés.

18. Procédé selon la revendication 16, **caractérisé en ce** qu'un mot de code de Williard à 16 bits est utilisé pour un premier mot de synchronisation (S1) et que le même mot de code est utilisé pour un deuxième mot de synchronisation (S2), cependant modifié de 2 bits.

19. Procédé selon les revendications 17 et 18, **caractérisé en ce** que le premier mot de synchronisation (S1) est caractérisé par le débit binaire "0000 0101 1100 111".

20. Procédé selon les revendications 17 et 18, **caractérisé en ce** que le second mot de synchronisation (S2) est caractérisé par le débit binaire "0000 0101 1111 1111".

21. Procédé selon la revendication 19, **caractérisé en ce** que le cadre de caractérisation de programme commence avec le premier mot de synchronisation (S1).

22. Procédé selon la revnedication 21, **caractérisé en ce** que l'information de caractérisation de programme (PA 1/2) pour le premier bloc de BCH du cadre principal est transmis après le mot de synchronisation (S1) "0000 0101 1100 1111".

23. Procédé selon la revendication 16, **caractérisé en ce** qu'un code de 8 bits (tableau) est utilisé pour l'information de caractérisation de programme (PA 1/2 ... PA 16/18).

24. Procédé selon la revendication 23, **caractérisé en ce que** les informations de caractérisation de programme (PA 1/2 ... PA 15/16) contiennent les données individuelles suivantes par bloc de caractérisation affecté au bloc de BCH :

a) caractérisation de type de programme (bit 7 ... bit 4)
b) caractérisation musique-langage (bit 3)
c) caractérisation de transmission stéréo/mono (bit 2 et bit 1)
d) bit de parité (bit 0).

25. Procédé selon la revendication 23, **caractérisé en ce que** les informations de caractérisation de programme (PA 1/2 ... PA 15/16) contiennent des espaces libres de code ($x_1$, $x_2$).

26. Procédé selon la revendication 24, **caractérisé en ce que**, pour la transmission stéréo; les bits 2 et 1 du code à 8 bits (tableau) sont inversée dans l'information de caractérisation de programme (PA 1/2 ... PA 15/16).

**27.** Procédé selon la revendication 26, **caractérisé en ce que** les bits 1 et 2 du code à 8 bits (tableau) sont des bits fixes.

**28.** Procédé selon la revendication 26, **caractérisé en ce que**, pour la transmission stéréo, l'information de programme (PAA 1/2 ... PA 15/16) est contenue dans le premier code à 8 bits transmis (tableau) et que la caractérisation de stéréo est contenue dans un second code à 8 bits de l'information de caractérisation de programme (PA 1/2 ... PA 15/16).

**29.** Procédé selon les revendications 27 et 28, **caractérisé en ce** que lors de l'information de caractérisation de programme (PA 1/2 ... PA 15/16) pour la caractérisation de transmission mono et pour la première partie de la caractérisation de transmission stéréo les bits 2 et 1 sont occupés avec "01".

**30.** Procédé selon la revendication 28, **caractérisé en ce** que lors de l'information de caractérisation de programme (PA 1/2 ... PA 15/16) pour la seconde partie de la caractérisation de transmission stéréo les bits 3 ... 1 sont occupés avec "010".

**31.** Procédé selon la revendication 30, **caractérisé en ce** que les bits 7 ... 4 sont disponibles pour des informations supplémentaires.

**32.** Procédé selon la revendication 16 et/ou 17, **caractérisé en ce** que les mots de synchronisation (S1, S2) servent à la synchronisation d'un facteur de cadrage.

Fig.1

Fig. 2

| L | Z1 | Z2 | Z3 | Z4 | Z5 | Z6 | Z7 | Z8 | Z9 | Z10 | Z11 | Z12 | Z13 | Z14 | Z15 | Z16 | Z17 | Z18 | Z19 | Z20 | Z21 | Z22 | Z23 | Z24 | Z25 | Z26 | Z27 | Z28 | Z29 | Z30 | | |

1    2    3    4    5    6    7    8    9    10

| R | Z31 | Z32 | Z33 | Z34 | Z35 | Z36 | Z37 | Z38 | Z39 | Z40 | Z41 | Z42 | Z43 | Z44 | Z45 | Z46 | Z47 | Z48 | Z49 | Z50 | Z51 | Z52 | Z53 | Z54 | Z55 | Z56 | Z57 | Z58 | Z59 | Z60 | | |

11    12    13    14    15    16    17    18    19    20

## Fig.3

EP 0 140 224 B1

| 0 0 0 0 | 0 1 0 1 | 1 1 0 0 | 1 1 1 1 | PA 1 | PA1A | PA 2 | PA 2 A | X 1 | X 2 | 0 0 0 0 | 0 1 0 1 | 1 1 1 1 | 1 1 1 1 |

$(4+2) \times 8$ bit

Fig. 4a

| S1 | PA 1/2 | S2 | PA 3/4 | S2 | PA 5/6 | S2 | PA 7/8 | S2 | PA9/10 | S2 | PA 11/12 | S2 | PA 13/14 | S2 | PA 15/16 | S1 | PA 1/2 |

Fig. 4b

Zi(1)

$t_n$ | 20 | $t_{n+1}$ | 20 | $t_{n+2}$ | 20 | $t_{n+3}$ | 20 | $t_{n+4}$ | 20 | $t_{n+5}$ | 20 | $t_{n+6}$ | 20 | $t_{n+7}$ | 20 |

Fig. 4c

Zi(2)

$t_n$ | 20 | $t_{n+1}$ | 20 | $t_{n+2}$ | 20 | $t_{n+3}$ | 20 | $t_{n+4}$ | 20 | $t_{n+5}$ | 20 | $t_{n+6}$ | 20 | $t_{n+7}$ | 20 |

Fig. 4d

Zi(16)

$t_n$ | 20 | $t_{n+1}$ | 20 | $t_{n+2}$ | 20 | $t_{n+3}$ | 20 | $t_{n+4}$ | 20 | $t_{n+5}$ | 20 | $t_{n+6}$ | 20 | $t_{n+7}$ | 20 |

Fig. 4e